# EUROPÄISCHE PATENTSCHRIFT

(11) **EP 1 285 586 B1**
(45) Veröffentlichungstag und Bekanntmachung des Hinweises auf die Patenterteilung: **18.07.2007**
(21) Anmeldenummer: 02017332.4
(22) Anmeldetag: 02.08.2002
(51) Int. Cl.: A23G 3/04, A23G 3/02, A23G 3/00

(54) **Verfahren und Vorrichtung zur kontinuierlichen Förderung von Süsswarenmassen**
Process and apparatus for continuous feeding of confectionery masses
Procédé et appareil pour alimentation continue en masse de confiserie

(30) Priorität: 21.08.2001 DE 10139947
(43) Veröffentlichungstag der Anmeldung: 26.02.2003
(73) Patentinhaber: Klöckner Hänsel Processing GmbH, 30163 Hannover (DE)
(72) Erfinder: Koch, Bernhard, 30655 Hannover (DE); de Vilchez-Kehr, José, 30177 Hannover (DE); Mergelsberg, Reinhard, 30826 Garbsen (DE)
(74) Vertreter: Taruttis, Stefan Georg

(56) Entgegenhaltungen:
- EP-A- 0 418 106
- EP-A- 0 820 701
- DE-A- 3 130 968
- FR-A- 2 733 122
- GB-A- 1 050 549
- GB-A- 1 271 725
- GB-A- 1 275 477
- US-A- 4 666 730
- US-A- 4 839 193
- US-A- 5 167 981

## Beschreibung

In der industriellen Fertigung von Süßwaren sind kontinuierlich arbeitende Anlagen weit verbreitet. Diese Anlagen umfassen im allgemeinen einen Kocher, in dem eine nach vorgegebenen Rezepturen zusammengesetzte Süßwarenmasse (z.B. Bonbonmasse) hergestellt wird, und eine nachgeschaltete Bearbeitungsstrecke, in der die Masse, gegebenenfalls mit Ingredienzien gemischt, gekühlt und dann schließlich zu einzelnen Bonbons geformt wird.

Die kontinuierliche Förderung der Masse, insbesondere vom Kocher bzw. einem dem Kocher nachgeschalteten Ausdampfraum zu einem Kühlband, erfolgt sehr häufig mittels einer Austragsschnecke, welche die Form eines sich in einem Statorgehäuse drehenden Schneckenrotors hat. Der Rotor ist bei den bisherigen Anlagen an den beiden Enden des Statorgehäuses, also beidseitig gelagert, und für die Abfuhr der Masse am Ende des Rotors ist im Statorgehäuse ein Austragsstutzen vorgesehen, durch den hindurch die Masse etwa senkrecht zur Rotorachse ausströmt.

Der Austragsschnecke sind oftmals noch ein oder mehrere Mischer in Form von Schneckenmischern nachgeschaltet, die ebenfalls einen sich in einem Statorgehäuse drehenden Schneckenrotor umfassen, der ebenfalls beidseitig gelagert ist und einen etwa senkrecht zur Rotorachse verlaufenden Austragsstutzen besitzt. Das Statorgehäuse ist dabei noch mit Zufuhrstutzen versehen, durch die hindurch sich etwaige Ingredienzien wie beispielsweise Farblösungen, Aromen oder medizinische Wirkstoffe, die gasförmig, flüssig, pastenförmig, körnig oder pulverig sein können, kontinuierlich eindosieren lassen.

Die GB 1 050 549 offenbart eine Förderschnecke, deren Stator abschnittsweise unterschiedlich temperiert wird, um eine Zuckerlösung nacheinander in dünner Schicht schnell zu Bonbonmasse gekocht wird und anschließend abgedampft, vakuumiiert und gekühlt werden kann. Die gekühlte fertige Bonbonmasse tritt aus der in Achsrichtung des Rotors angeordneten Extruderdüse.

Die DB 1 275 477 zeigt eine beidseitig gelagerte Austragsschnecke zur Förderung von Bonbonmassen, die im Anschluss an einen Vakuumraum angebracht sein kann und ein beheizbares Gehäuse aufweist.

Die EP 0 820 701 betrifft einen Extruder zur Herstellung einer pastösen Masse aus Bestandteilen für Schokolade. Damit betrifft die D 2 einen Extruder für die klassische Kombination von Wärmeeintrag durch Reibung und Mischen zur Herstellung einer pastösen Masse aus granulärem festen oder halbfesten Material, wobei entsprechend der Temperaturempfindlichkeit des Produkts eine Temperatur von 0 bis 28 °C durch Kühlung von Rotor und Stator eingehalten werden soll.

Die US 4 839 193 offenbart einen mehrstufigen Schraubenförderer zur Herstellung von Mandelpaste aus ganzen Mandeln, dessen Rotor in mehrere Abschnitte untergliedert ist, die zur Zerkleinerung, Wärmebehandlung und Zumischung von Zucker dienen.

Die US 4 666 730 zeigt ein Verfahren und eine Vorrichtung zur kontinuierlichen Herstellung einer gekochten Bonbonmasse. Die gezeigte Austragsschnecke ist beidseitig gelagert und die Bonbonmasse tritt aus dem Auslaufbereich durch einen senkrecht zum Rotor angeordneten Austragsstutzen aus und wird unmittelbar in eine weitere Förderschnecke geführt, von der ein Teil als Mischvorrichtung ausgebildet ist. Das Austragsende der Mischvorrichtung besteht aus einem senkrecht zu dessen Achse angeordneten Austragsstutzen.

Die DE 313 09 68 offenbart ein Schlagwerk zur Herstellung belüfteter Zuckermassen, das eine in einem rotationssymmetrischen Gehäuse rotierende Trommel aufweist, von der ein Endabschnitt kegelförmig ausgebildet sein kann. Die Oberfläche der rotieren Trommel und die Innenfläche dieses umfassenden Gehäuses sind mit Misch- und Schlagwerkzeugen ausgerüstet, die bei Rotation der Trommel in ihrem Gehäuse aneinander vorbei bewegt werden, um durch eine intensive Scherwirkung Luft unter Süßwarenmasse zu mischen.

Die GB 1 271 725 zeigt eine schematische Darstellung einer Schnecke unterhalb eines Vakuumraums mit anschließendem Schlagwerk und eine weitere schematische Förderschnecke, jedoch ohne konisch und koaxial zum Rotor ausgebildeten Austragsbereich und ohne Dampfbeheizung von Rotor und Gehäuse.

Die US 5 167 981 betrifft das Kochen zuckerfreier Bonbons unter Vakuum. Die Austragsschnecken zum Austragen der Masse aus dem Vakuumbehälter sind nur schematisch dargestellt.

Der beheizbare Extruder der FR 2 733 122 mit zwei ineinandergreifenden Rotoren dient zur Herstellung von flüssigem Karamel. Das Gehäuse ist nicht beheizbar und ist nur schematisch dargestellt.

Die EP 0418106 offenbart ein Verfahren zur Herstellung von Süßwaren aus einem polymeren Zuckeraustauschstoff, der durch Polymerisation von Glucose-Einheiten in Gegenwart von Zitronensäure und Sorbitol erhalten wird. Dieser Zuckeraustauschstoff wird Polydextrose genannt und zeichnet sich dadurch aus, dass er nicht auskristallisiert. Es werden vorzugsweise zwei parallele, ineinander eingreifende Rotoren verwendet. Die beschriebene Förderschnecke wird zu dem Zweck eingesetzt, möglichst kurze Verweilzeiten der Masse während der Kochung unter Vakuum zu realisieren. Denn der Einsatz der Schnecke zur Kochung ermöglicht den Einsatz geringerer Wassermengen und die Erwärmung der Bonbonmasse zur kontrollierten Aufschmelzung durch den Eintrag mechanischer Energie aufgrund der Schneckenrotation.

Bei den bisherigen Anlagen hat sich gezeigt, daß die erforderliche gleichmäßig-schonende Behandlung der Masse nicht immer gewährleistet werden konnte. Dies hat sich als Folge der Tatsache herausgestellt, daß Teile der Masse insbesondere am Ende der Schneckenrotoren eine unterschiedlich lange Verweilzeit haben können und die Masse in jedem Fall beim Austrag eine abrupte Umlenkung erfährt, wodurch Temperatur- und Viskositätsdifferenzen in der Masse oder andere Nachteile entstehen, beispielsweise eine unerwünschte Rekristallisation der Masse eintritt.

Hier schafft die Erfindung Abhilfe. Sie hat zum Ziel, eine gleichmäßig-schonende Behandlung der Masse auch auf dem Weg vom Kocher zum Kühlband zu gewährleisten und erreicht dieses Ziel durch die Kennzeichnenden Merkmale der Ansprüche 1 und 9.

Vorrichtungsmäßig wird dieses Ziel dadurch erreicht, daß die Austragsschnecke und/oder die Mischer mit nur einlaßseitig gelagerten Schnekkenrotoren versehen und die Austragsstutzen dieser Einrichtungen im wesentlichen in Achsrichtung der Schneckenrotoren verlaufend angeordnet sind. Dadurch wird in einfacher und sehr eleganter Weise vermieden, daß sich am Austragsende der Schneckenrotoren unkontrollierte Verweilzeiten oder abrupte Umlenkungen einstellen, die einer gleichmäßig-schonenden Behandlung der Masse entgegenstehen.

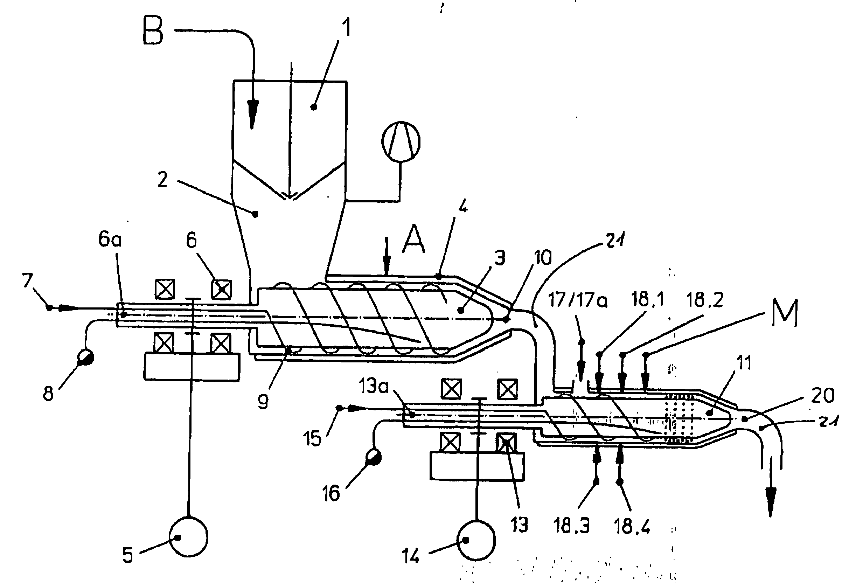

Die Erfindung führt auch noch zu weiteren Vorteilen, die bei der nachfolgenden Beschreibung eines Ausführungsbeispiels anhand der Zeichnung näher erläutert werden. Die Zeichnung stellt dar
schematisch einen erfindungsgemäß ausgestalteten Teil einer kontinuierlichen Anlage zur Herstellung von Süßwaren.

Bei der zeichnerisch dargestellten Anlage gelangt eine Süßwarenmasse, z.B. eine Bonbonmasse B, kontinuierlich von einem (nicht weiter dargestellten) Kocher in einen Ausdampfraum 1 und von dort weiter in einen Vakuumraum 2. Aus diesem Vakuumraum wird die Masse mittels einer Austragsschnecke A, bestehend aus einem Schneckenrotor 3 und einem Statorgehäuse 4, ausgetragen. Sowohl der Rotor 3 als auch der Stator 4 und gegebenenfalls die Rotorenwendel 9 sind beheizbar ausgerüstet.

Der Rotor 3 ist nur einlaßseitig in einem Lager 6 gelagert und wird dort durch einen Motor 5 angetrieben. über den Wellenstumpf 6a des Rotors auf der Lagerseite erfolgt die Dampfversorgung 7 und die Kondensatabführung 8 aus dem Innenraum und gegebenenfalls der beheizten Wendel 9 des Rotors. Diese Wendel kann eingängig oder mehrgängig und mit konstanter oder nicht konstanter Steigung ausgeführt sein, was sich im wesentlichen nach Art und Beschaffenheit der zu fördernden Masse B richtet und eine eventuelle Volumenänderung der Masse bei Verlassen des Unterdruckbereichs 2 berücksichtigt. Das gleiche gilt für den Durchmesser der Welle des Rotors 3, der konstant, gestuft abgesetzt oder kontinuierlich steigend ausgeführt sein kann. Der Austragsbereich 10 der Austragsschnecke A ist in der zeichnerischen Darstellung konisch und koaxial zum Rotor 3 ausgebildet, was die bevorzugte Ausführungsform ist. Der Austragsbereich kann aber auch exzentrisch-konisch, d.h. versetzt zur Achse des Rotors 3 gegebenenfalls auch in einem leichten Winkel dazu, ausgebildet sein, es sollte nur sichergestellt sein, daß sich am Austragsende des Rotors 3 keine abrupte Umlenkung der Masse einstellt.

Der Austragsschnecke A nachgeschaltet sind ein oder mehrere Schnekkenmischer, von denen ein Mischer M zeichnerisch dargestellt ist. Dieser Mischer (und auch jeder der übrigen Mischer, falls mehrere Mischer vorgesehen sind) umfaßt ein Statorgehäuse 12 und einen Rotor 11. Auch dieser Rotor 11 ist nur einlaßseitig in einem Lager 13 gelagert und wird dort von einem Motor 14 angetrieben. Außerdem ist der Innenraum des Rotors 11 und gegebenenfalls seine Wendel 19 ebenso wie der Rotor 3 beheizbar ausgebildet, wobei auch hier die Dampfversorgung 15 und die Kondensatabführung 16 aus dem Innenraum und der gegebenenfalls beheizten Wendel 19 über den Wellenstumpf 13a auf der Lagerseite erfolgt. Ferner weist der Mischer Dosierstutzen 17 und 18.1 - 18.4 für einzudosierende Ingredienzien auf, wobei besonders darauf hinzuweisen ist, daß der Rotor 11 eine überdruckfreie Zone 17a erzeugen kann, welche die Zugabe von z.B. körnigen und pulverigen Ingredienzien durch Schwerkraft ermöglicht. Im übrigen ist auch hier der Austragsbereich 20 des Mischers M bevorzugt koaxial-konisch ausgebildet, kann aber auch exzentrisch-konisch ausgebildet sein, wie dies schon für die Austragsschnecke A beschrieben wurde. Von diesem Austragsbereich 20 aus gelangt die Masse durch eine bogenförmigen Rohrabschnitt 21, der beispielsweise dieselbe Querschnittsfläche, wie der angrenzende kegelförmige Austragsbereich 10, 20 aufweist zur weiteren Bearbeitung, die hier nicht mehr erläutert wird.

Die einseitige, also fliegende Lagerung der Schneckenrotoren der Austragsschnecke A und des Mischers M ermöglichen, worauf schon mehrfach hingewiesen wurde, eine von abrupten Umlenkungen freie Ausbildung der Austragsbereiche 10 bzw. 20. Ein weiterer wichtiger Vorteil ist darin zu sehen, daß keine Lagerung unter überdruck steht und somit Leckagen, verursacht z.B. durch permanente Druckbelastung durch die zu fördernde süßwarenmasse, vorteilhaft vermieden werden. Das ist besonders bei abrasiven Massen und/oder höheren Temperaturen von erheblicher Bedeutung. Oberhaupt führt das Fehlen einer abrupten Umlenkung der Masse sehr vorteilhaft zu einer reduzierten mechanischen Beanspruchung der Geräte.

Es wurde bereits erwähnt, daß der Rotor 11 des Mischers M eine überdruckfreie Zone erzeugen kann. Dies gilt natürlich auch für den Rotor 3 der Austragsschnecke A. Generell können beide Rotoren so ausgestaltet und betrieben werden, daß bei der Förderung der Masse eine Druckdifferenz erzeugt wird, die z.B. saugseitig einen Unterdruck und druckseitig einen Überdruck erlaubt.

## Patentansprüche

1. Austragsschnecke (A) oder Schneckenmischer (M) mit einem Schneckenrotor (3, 11) zur kontinuierlichen Förderung einer Bonbonmasse und mit einem beheizbar ausgerüsteten Statorgehäuse (4, 12), das einen Einlassbereich und einen Austragsbereich (10, 20) aufweist, der konisch und koaxial zum Rotor (3, 11) ausgebildet ist, und einen Rotor (3, 11), der nur auf Seiten des Einlasses an einem Wellenstumpf (6a, 13a) gelagert ist,
**dadurch gekennzeichnet, dass**
der Rotor (3, 11) mit einer Dampfzufuhr (7, 15) zum Innenraum des Rotors beheizbar ausgebildet ist und die Dampfzufuhr (7, 15) und die Kondensatabführung (8, 16) aus dem Innenraum des Rotors jeweils an dem gelagerten Wellenstumpf (6a, 13a) erfolgt.

2. Austragsschnecke (A) oder Schneckenmischer (M) nach Anspruch 1, **dadurch gekennzeichnet, dass** der Austragsbereich (10, 20) des Statorgehäuses (4) exzentrisch-konisch zur Achse des Rotors (3, 11) ausgebildet ist.

3. Austragsschnecke (A) oder Schneckenmischer (M) nach einem der voranstehenden Ansprüche, **dadurch gekennzeichnet, dass** die Wendel (9) des Rotors (3,11) eingängig oder mehrgängig ist.

4. Austragsschnecke (A) oder Schneckenmischer (M) nach einem der voranstehenden Ansprüche, **dadurch gekennzeichnet, dass** die Wendel (9) des Rotors (3, 11) eine nicht konstante Steigung hat.

5. Austragsschnecke (A) oder Schneckenmischer (M) nach einem der voranstehenden Ansprüche, **dadurch gekennzeichnet, dass** der Durchmesser des im Produktraum befindlichen Teils der Welle des Rotors (3, 11) nicht konstant ist.

6. Schneckenmischer (M) nach einem der voranstehenden Ansprüche, **dadurch gekennzeichnet, dass** der Schneckenmischer Dosierstutzen (17, 18.1 - 18.4) für einzudosierende Ingredienzien aufweist.

7. Anordnung von einer Austragsschnecke (A) mit Schneckenmischern (M), **dadurch gekennzeichnet, dass** Austragsschnecke (A) und Schneckenmischer (M) gemäß einem der voranstehenden Ansprüche ausgebildet sind und der Austragsschnecke (A) mehrere Schneckenmischer (M) nachfolgen.

8. Vorrichtung zur kontinuierlichen Förderung einer Süßwarenmasse, die einen Kocher, einen dem Kocher nachgeschalteten Ausdampfraum (2), einen Vakuumraum mit einer Austragsschnecke und ein Kühlband aufweist,
**gekennzeichnet durch** eine Austragsschnecke (A) nach einem der Ansprüche 1 bis 6.

9. Verfahren zur kontinuierlichen Förderung einer Bonbonmasse, die aus einem Kocher und durch einen Ausdampfraum (2) in einen Vakuumraum gelangt, aus dem Vakuumraum,
**dadurch gekennzeichnet, dass**
mindestens eine Austragsschnecke (A) und/oder ein Schneckenmischer (M) zur Förderung mit einem Statorgehäuse (12) verwendet wird, das einen Einlassbereich und einen konischen Austragsbereich (10, 20) aufweist, der konisch und koaxial zum Rotor (3, 11) ausgebildet ist, und einen Rotor (3, 11), der nur auf Seiten des Einlasses an einem Wellenstumpf (6a, 13a) gelagert ist, und der Rotor (3, 11) mit einer Dampfzufuhr (7, 15) zum Innenraum des Rotors beheizbar ausgebildet ist und die Dampfzufuhr (7, 15) und die Kondensatabführung (8, 16) aus dem Innenraum des Rotors jeweils an dem gelagerten Wellenstumpf (6a, 13a) erfolgt und das Statorgehäuse (4) beheizbar ausgerüstet ist.

## Claims

1. Discharge screw (A) or screw mixer (M) with a screw rotor (3, 11) for the continuous feeding of a confectionary mass and with a stator housing (4, 12) equipped so it can be heated, which has a inlet area and a discharge area (10, 20), which is made conical and coaxial to the rotor (3, 11), and a rotor (3, 11), which is only supported on the side of the inlet on a shaft end (6a, 13a),
**characterised in that**
the rotor (3, 11) is made with a steam supply (7, 15) to the interior of the rotor and heatable and the steam supply (7, 15) and condensate removal (8, 16) is effected from the interior of the rotor at the supported shaft end (6a, 13a) respectively.

2. Discharge screw (A) or screw mixer (M) according to claim 1, **characterised in that** the discharge area (10, 20) of the stator housing (4) is made eccentrically conical to the axis of the rotor (3, 11).

3. Discharge screw (A) or screw mixer (M) according to one of the foregoing claims, **characterised in that** the coil (9) of the rotor (3, 11) is single thread or multiple thread.

4. Discharge screw (A) or screw mixer (M) according to one of the foregoing claims, **characterised in that** the coil (9) of the rotor (3, 11) does not have a constant pitch.

5. Discharge screw (A) or screw mixer (M) according to one of the foregoing claims, **characterised in that** the diameter of the part of the coil of the rotor (3, 11) located in the product chamber is not constant.

6. Screw mixer (M) according to one of the foregoing claims, **characterised in that** the screw mixer has dosing connectors (17, 18.1 - 18.4) for the ingredients to be added.

7. Arrangement of a discharge screw (A) with screw mixers (M), **characterised in that** the discharge screw (A) and screw mixers (M) are made according to one of the foregoing claims and several screw mixers (M) follow on from the discharge screw (A).

8. Apparatus for continuous feeding of a confectionary mass, which has a cooker, an evaporation chamber (2) downstream of the cooker, a vacuum chamber with a discharge screw and a cooling conveyor, **characterised by** a discharge screw (A) according to one of claims 1 to 6.

9. Process for continuous feeding of a confectionary mass, which gets to a vacuum chamber from a cooker and through an evaporation chamber (2), from the vacuum chamber,
**characterised in that**
at least one discharge screw (A) and / or one screw mixer (M) for feeding is used with a stator housing (12), which has an inlet area and a conical discharge area (10, 20), which is made conical and coaxial to the rotor (3, 11), and a rotor (3, 11), which is only supported on the side of the inlet on a shaft end (6a, 13a), and the rotor (3, 11) is made with a steam supply (7, 15) to the interior of the rotor, so as to be heatable and the steam supply (7,15) and the condensate removal (8, 16) is effected from the interior of the rotor at the supported shaft end (6a, 13a) respectively and the stator housing (4) is equipped so it can be heated.

## Revendications

1. Vis d'extraction (V) ou mélangeur à vis (M) munis d'un rotor à vis (3, 11) pour transporter en continu une masse de bonbon avec un boîtier stator équipé d'un chauffage (4, 12) présentant une zone d'admission et une zone d'extraction (10, 20) en forme de cône et à orientation coaxiale par rapport au rotor (3, 11), le rotor (3, 11) n'étant suspendu sur un arbre tronqué (6a, 13a) que du côté de l'admission,
**caractérisés par le fait que**
le rotor (3, 11) est conçu de façon à pouvoir être chauffé à l'aide d'une alimentation en vapeur (7, 15) vers l'intérieur du rotor, l'alimentation en vapeur (7, 15) et l'évacuation du condensat (8, 16) s'effectuant chacune de l'intérieur du rotor sur l'arbre tronqué suspendu (6a, 13a).

2. Vis d'extraction (V) ou mélangeur à vis (M) selon la revendication 1, **caractérisés par le fait que** la zone d'extraction (10, 20) du boîtier stator (4) est de forme conique et excentrique par rapport à l'axe du rotor (3, 11).

3. Vis d'extraction (V) ou mélangeur à vis (M) selon une des revendications précédentes, **caractérisés par le fait que** l'hélice (9) du rotor (3, 11) est à une ou plusieurs vitesses.

4. Vis d'extraction (V) ou mélangeur à vis (M) selon une des revendications précédentes, **caractérisés par le fait que** le pas de l'hélice (9) du rotor (3, 11) n'est pas constant.

5. Vis d'extraction (V) ou mélangeur à vis (M) selon une des revendications précédentes, **caractérisés par le fait que** le diamètre de la partie de l'arbre du rotor (3, 11) se trouvant dans la chambre des produits n'est pas constant.

6. Mélangeur à vis (M) selon une des revendications précédentes, **caractérisé par le fait que** le mélangeur à vis présente des manchons de dosage (17, 18.1 - 18.4) pour les ingrédients devant être dosés.

7. Disposition d'une vis d'extraction (V) avec des mélangeurs à vis (M), **caractérisée par le fait que** la vis d'extraction (V) et le mélangeur à vis (M) sont formés selon une des revendications précédentes et que plusieurs mélangeurs à vis (M) succèdent à la vis d'extraction (V).

8. Dispositif pour transporter en continu une masse de confiserie présentant un appareil de cuisson, une chambre de vaporisation (2) placée en aval de l'appareil de cuisson, une chambre de vide munie d'une vis d'extraction et une bande de refroidissement,
**caractérisé par** une vis d'extraction (V) selon une des revendications 1 à 6.

9. Procédé pour transporter en continu une masse de bonbon qui parvient, depuis un appareil de cuisson et à travers une chambre de vaporisation (2) dans une chambre de vide, **caractérisé par le fait**
**qu'**au moins une vis d'extraction (V) et/ou un mélangeur à vis (M) de transport, avec un boîtier stator (12), est employé, qui présente une zone d'admission et une zone conique d'extraction (10, 20), en forme de cône et à orientation coaxiale par rapport au rotor (3, 11), et un rotor (3, 11) qui n'est suspendu sur un arbre tronqué (6a, 13a) que du côté de l'admission, le rotor (3, 11), muni d'une alimentation en vapeur (7, 15) vers l'intérieur du rotor, étant conçu de façon à pouvoir être chauffé, l'alimentation en vapeur (7, 15) et l'évacuation du condensat (8, 16) s'effectuant chacune depuis l'intérieur du rotor sur un arbre tronqué suspendu (6a, 13a), le boîtier stator (4) étant équipé d'un chauffage.
